(19) Europäisches Patentamt
European Patent Office
Office européen des brevets

(11) **EP 1 599 426 B1**

(12) **FASCICULE DE BREVET EUROPEEN**

(45) Date de publication et mention de la délivrance du brevet:
**30.07.2008 Bulletin 2008/31**

(21) Numéro de dépôt: **04704254.4**

(22) Date de dépôt: **22.01.2004**

(51) Int Cl.:
*C03C 3/087* ^(2006.01)    *C03C 4/02* ^(2006.01)

(86) Numéro de dépôt international:
**PCT/FR2004/000150**

(87) Numéro de publication internationale:
**WO 2004/067461 (12.08.2004 Gazette 2004/33)**

(54) **COMPOSITION DE VERRE SILICO-SODO-CALCIQUE GRIS DESTINEE A LA FABRICATION DE VITRAGES**

GRAUE KALKNATRONGLASZUSAMMENSETZUNG FÜR DIE HERSTELLUNG VON GLASSCHEIBEN

COMPOSITION FOR GREY SILICA-SODIUM CALCIC GLASS FOR PRODUCING GLAZING

(84) Etats contractants désignés:
**AT BE BG CH CY CZ DE DK EE ES FI FR GB GR HU IE IT LI LU MC NL PT RO SE SI SK TR**

(30) Priorité: **24.01.2003 FR 0301164**

(43) Date de publication de la demande:
**30.11.2005 Bulletin 2005/48**

(73) Titulaire: **SAINT-GOBAIN GLASS FRANCE**
**92400 Courbevoie (FR)**

(72) Inventeur: **TEYSSEDRE, Laurent,**
**Saint-Gobain Recherche**
**F-93300 Aubervilliers (FR)**

(74) Mandataire: **Jamet, Vincent**
**Saint-Gobain Recherche,**
**39, quai Lucien Lefranc**
**93300 Aubervilliers (FR)**

(56) Documents cités:
**US-A- 3 326 715       US-A- 5 888 917**
**US-B1- 6 475 626**

**Description**

L'invention se rapporte à une composition de verre silico-sodo-calcique de couleur gris, en particulier pour la réalisation de verres plats par flottage sur un bain de métal fondu tel que l'étain ou par laminage, ces verres étant destinés à former des vitrages pour le bâtiment et l'automobile.

Les verres gris colorés dans la masse sont généralement recherchés pour leur caractère esthétique et pour les propriétés spécifiques qu'ils peuvent posséder, notamment des propriétés protectrices vis à vis du rayonnement solaire.

Dans le domaine du bâtiment, ils sont surtout utilisés pour vitrer des édifices situés dans des régions fortement ensoleillées, mais on peut également les employer pour la décoration, par exemple sous la forme de mobilier, d'éléments d'agencement et de balustrades pour terrasse ou cage d'escalier. Les verres gris peuvent aussi être utilisés en tant que vitrages de véhicules automobiles, à l'arrière notamment, et ferroviaires.

Les verres silico-sodo-calciques en général sont couramment fabriqués sous la forme de ruban par le procédé de flottage (procédé « float »), et le ruban étant par la suite découpé sous forme de feuilles qui peuvent ultérieurement être bombées ou subir un traitement visant à renforcer les propriétés mécaniques, par exemple une trempe thermique.

La coloration grise souhaitée est obtenue en ajoutant, en tant qu'agents colorants, du sélénium et du cobalt dans la composition silico-sodo-calcique standard.

La quantité de sélénium et de cobalt à introduire dépend de la teneur initiale en fer dans la composition standard, et plus particulièrement de la teneur en $Fe_2O_3$ qui donne au verre une coloration jaune à verte. Selon le degré d'oxydation sous lequel il se trouve, le sélénium apporte une composante rose, rouge ou ambre qui s'oppose à celle du fer, ce qui permet d'ajuster la couleur finale du verre.

L'utilisation du sélénium dans des compositions verrières présente cependant plusieurs inconvénients sur le plan industriel.

Dans le verre, le sélénium existe sous plusieurs degrés d'oxydation stables dont certains confèrent au verre une coloration particulière plus ou moins intense (par exemple $Se^o$ donne une coloration rose). De plus, la couleur finale dépend de la nature des autres colorants présents dans le verre avec lesquels le sélénium est susceptible de se combiner : par exemple $Se^{2-}$ forme avec les ions ferriques un chromophore conférant une coloration brun-rouge au verre. La maîtrise de la teinte impose donc un contrôle très précis du rédox dans un domaine de valeurs relativement étroit.

Ensuite, la température qui règne à l'intérieur du four où s'opère la fusion du mélange vitrifiable est très supérieure à la température de vaporisation du sélénium. Il s'ensuit que la majeure partie du sélénium (plus de 85 %) se retrouve dans l'atmosphère du four ce qui nécessite d'équiper les cheminées avec des électro-filtres pour retenir le sélénium présent dans les fumées et les poussières. Au coût déjà très élevé de ces dispositifs de filtration s'ajoute le problème du recyclage des poussières retenues par les filtres dont seulement une partie est réintroduite dans le four.

Il a bien été proposé de limiter les envols de sélénium en ajoutant des oxydants dans le mélange vitrifiable afin d'obtenir les formes oxydées du sélénium plus solubles dans le verre mais cette manière de procéder n'est pas satisfaisante. En effet, les oxydants préconisés sont des nitrates, le plus souvent de sodium, qui génèrent des émissions de $NO_x$ considérées comme une source de pollution supplémentaire.

Enfin, le sélénium présente une toxicité élevée même à faible concentration, en particulier lorsqu'il est sous forme de sélénite ou de séléniate. Des dispositions particulières sont donc nécessaires pour permettre sa manipulation.

Pour remédier aux inconvénients précités, il a été proposé plusieurs solutions visant à éliminer tout ou partie du sélénium dans les compositions verrières.

Il a été envisagé de substituer le sélénium par du sulfure de cadmium CdS et/ou du séléniure de cadmium CdSe. L'usage de ces composés dans les conditions du procédé n'est pas possible à cause de leur toxicité très élevée.

Il a aussi été proposé d'utiliser du cuivre qui, sous forme colloïdale ($Cu°$ ou $Cu_2O$) donne une coloration rouge au verre. La cristallisation des agrégats de cuivre est cependant une opération délicate à contrôler et nécessite en outre un traitement thermique supplémentaire pour révéler la couleur.

Dans US-A-5 264 400, il est proposé de remplacer une partie du sélénium par de l'oxyde d'erbium $Er_2O_3$. Le verre obtenu a une couleur bronze et contient 0,2 à 0,6 % de fer, 0,1 à 1 % de $CeO_2$, 0 à 50 ppm de CoO, 0 à 100 ppm de NiO, 0,2 à 3 % de $Er_2O_3$ et 3 à 50 ppm de Se.

Le pouvoir colorant de l'oxyde d'erbium est relativement faible et la quantité à introduire dans le verre est importante. Or, l'oxyde d'erbium est un composé peu répandu à l'état naturel qui en outre se trouve mélangé à d'autres oxydes et doit donc subir des traitements de purification. Son coût est par conséquent très élevé.

Dans US-A-5 656 500, il est proposé un verre gris ou bronze sans sélénium contenant les colorants suivants : 0 à 0,45 % de $Fe_2O_3$, 0 à 0,5 % de $V_2O_5$, 0,5 à 2 % de $MnO_2$, 0 à 0,05 % de NiO, 0 à 0,1 % de CuO et 0 à 0,008 % de CoO.

Une autre solution largement développée dans la littérature a consisté à utiliser de l'oxyde de nickel.

Dans JP-B-52 49010, il est proposé un verre silico-sodo-calcique contenant 0,1 à 0,5 % de $Fe_2O_3$, 0,003 à 0,02 % de CoO, 0,0005 à 0,0010 % de Se et 0 à 0,002 % de NiO.

Dans EP 677 492, il est décrit un verre gris à vert contenant 0,45 à 0,95 % de fer total, 0,09 à 0,185 % de FeO, 8 à 30 ppm de cobalt et au moins un des composants suivants : Se (0-10 ppm), MnO (0-0,5 %) et NiO (0-30 ppm).

Dans FR-A-2 672 587, il est décrit un verre gris pour l'automobile comprenant 0,2 à 0,6 % de fer, 5 à 50 ppm de Se, 0 à 50 ppm de CoO, 0 à 100 ppm de NiO, 0 à 1 % de $TiO_2$ et 0,1 à 1 % de $CeO_2$.

Dans JP-B-56 41579, il est proposé un verre gris contenant 0,1 à 0,2 % de $Fe_2O_3$, 0,02 à 0,06 % de NiO, 0,001 à 0,004 % de CoO et 0,01 à 0,5 % de MnO. Ce verre présente une nuance bleu-violacé à rouge-violacé.

Le document US 5 888 917 décrit des substrats pour écran plasma comprenant les agents colorants suivants : $Fe_2O_3$ 0-0,08 % en poids (fer total), 0-150 ppm de CoO et 0-1200 ppm de NiO ainsi que la matrice suivante (en % massique): 50-72 % $SiO_2$, 0-15 % $Al_2O_3$, 6-24 % $R_2O$ (R=Li, Na ou K) et 6-24 % R'O (R' = Mg, Ca, Sr, Ba ou Zn).

La présente invention a pour but de proposer une composition de verre silico-sodo-calcique gris exempte de sélénium, pouvant être utilisée pour former des vitrages en particulier pour le bâtiment, cette composition conservant des propriétés optiques similaires à celles des compositions connues renfermant du sélénium.

Ce but est atteint selon la présente invention par la composition de verre coloré gris qui comprend les agents colorants suivants dans une teneur variant dans les limites pondérales suivantes :

| | |
|---|---|
| $Fe_2O_3$ (fer total) | 0,01 à 0,14 % |
| CoO | 40 à 150 ppm |
| NiO | 200 à 700 ppm |

le rapport pondéral NiO/CoO étant compris entre 3,5 et 6, et le verre présentant une transmission lumineuse globale sous illuminant D65 ($TL_{D65}$) comprise entre 20 et 60 % mesurée pour une épaisseur de 6 mm.

Comme indiqué précédemment, les verres entrant dans le cadre de la présente invention sont des verres gris c'est-à-dire qui présentent une courbe de transmission qui ne varie pratiquement pas en fonction de la longueur d'onde visible.

Dans le système C.I.E. (Commission Internationale de l'Eclairage), les corps gris ne possèdent pas de longueur d'onde dominante et leur pureté d'excitation est nulle. Par extension, il est généralement admis comme gris tout -corps dont la courbe est relativement plate dans le domaine visible mais qui présente néanmoins des bandes d'absorption faibles permettant de définir une longueur d'onde dominante et une pureté faible mais non nulle.

Les verres gris conformes à l'invention sont définis par la suite par leurs coordonnées chromatiques L*, a* et b* mesurées sous l'illuminant standard D65 défini par la C.I.E. qui représente la lumière du jour moyenne, avec UV, ayant une température de couleur de 6500 K permettant d'évaluer les propriétés optiques de vitrages destinées au bâtiment ayant une épaisseur de 6 mm. Les verres selon l'invention sont définis comme suit :

L* varie de 50 à 85, de préférence 65 à 75
a* varie de-4 à 0
b* variede-5à+3

L'utilisation des agents colorants précités dans les limites de l'invention permet de conférer la coloration gris recherchée et aussi d'ajuster au mieux les propriétés optiques et énergétiques du verre.

L'action des colorants pris individuellement est en général bien décrite dans la littérature.

La présence de fer dans une composition de verre peut résulter des matières premières, en tant qu'impuretés, ou d'un ajout délibéré visant à colorer le verre. Il est connu que le fer existe sous la forme d'ions ferriques ($Fe^{3+}$) et d'ions ferreux ($Fe^{2+}$). La présence d'ions $Fe^{3+}$ confère au verre une légère coloration jaune et permet d'absorber les radiations ultraviolettes. La présence d'ions $Fe^{2+}$ donne au verre une coloration bleu-vert plus prononcée et induit une absorption du rayonnement infrarouge. L'augmentation de la teneur en fer sous ses deux formes accentue l'absorption des radiations aux extrémités du spectre visible, cet effet se faisant au détriment de la transmission lumineuse. Inversement, en réduisant la proportion de fer, en particulier sous forme $Fe^{2+}$, on dégrade les performances en termes de transmission énergétique alors que la transmission lumineuse augmente.

Dans la présente invention, la teneur en fer total dans la composition est comprise entre 0,01 et 0,14 %, de préférence entre 0,07 et 0,12 %. Une teneur en fer inférieure à 0,01 % nécessite d'avoir des matières premières ayant un degré de pureté élevé qui se traduit par un coût du verre bien trop important pour un usage en tant que vitrage bâtiment. Au-delà de 0,14 % en fer, la composition de verre n'a pas la coloration désirée. On souligne qu'il s'agit ici d'une teneur en fer peu élevée permettant d'élaborer le verre par flottage dans des installations dédiées à la production de verres « clairs » où la teneur maximale en fer est de l'ordre de 0,1 %. Procéder dans ces conditions permet de réduire le temps de transition nécessaire pour passer d'une composition de verre à une autre et permet également d'abaisser la quantité d'énergie nécessaire pour fondre le mélange vitrifiable, ce qui contribue à réduire le coût du verre.

En outre, la faible teneur en fer utilisée dans les compositions selon l'invention permet d'avoir une valeur de a* proche de zéro, c'est-à-dire qui donne au verre une nuance pas trop verte. En particulier, lorsque le verre est destiné à être trempé thermiquement il est intéressant d'avoir une valeur de a* supérieure à - 3 car celle-ci tend à se rapprocher de 0 après la trempe, ce qui signifie que le verre devient encore plus neutre.

Le cobalt produit une coloration bleue intense et entraîne aussi une diminution de la transmission lumineuse. La quantité doit donc être parfaitement contrôlée pour rendre la transmission lumineuse compatible avec l'usage auquel on destine le verre. Conformément à l'invention, la teneur en oxyde de cobalt est comprise entre 40 et 150 ppm, de préférence entre 70 et 90 ppm.

L'oxyde de nickel confère au verre une coloration brune. Dans la présente invention, on limite la teneur en oxyde de nickel à 700 ppm afin d'éviter qu'il ne se combine avec des composés soufrés venant des matières premières ou d'autres composés ajoutés volontairement en formant des billes de sulfure de nickel. Il est en effet connu que la phase « haute température » du sulfure de nickel qui se trouve « figée » lors de la trempe thermique peut se transformer progressivement en une phase « basse température » dont la taille plus importante génère des contraintes mécaniques qui font éclater le verre d'où un risque d'accident. De manière préférée, la teneur en oxyde de nickel est comprise entre 300 et 500 ppm.

L'association de NiO et de CoO dans un rapport pondéral compris entre 3,5 et 6 permet d'obtenir la couleur grise répondant aux coordonnées chromatiques indiquées plus haut. En jouant sur le rapport NiO/CoO, il est notamment possible d'ajuster la valeur de b* dans la zone correspondant à une nuance bleue, cette nuance se révélant être particulièrement intéressante sur le plan esthétique.

En règle générale, il est difficile de prévoir les propriétés optiques et énergétiques d'un verre lorsque celui-ci contient plusieurs agents colorants. Ces propriétés résultent en effet d'une interaction complexe entre les différents agents dont le comportement est directement lié à leur état d'oxydation.

Dans la présente invention, le choix des colorants, de leur teneur et de leur état d'oxydoréduction est déterminant pour l'obtention de la coloration gris et de propriétés optiques.

Notamment, le rédox défini par le rapport de la teneur pondérale en oxyde ferreux (exprimé en FeO) à la teneur pondérale en fer total (exprimé en $Fe_2O_3$) varie de 0,1 à 0,3, de préférence de 0,15 à 0,28 pour des raisons liées essentiellement à la fusion et à l'affinage du verre.

Le rédox est généralement contrôlé à l'aide d'agents oxydants tels que le sulfate de sodium, et d'agents réducteurs tels que du coke, dont les teneurs relatives sont ajustées pour obtenir le rédox souhaité.

Selon une première forme de réalisation de l'invention, la composition de verre se caractérise en ce que le rapport pondéral NiO/CoO est compris entre 5 et 6, ce qui permet d'obtenir des verres ayant une valeur de b* comprise entre -1 et +2.

Selon une deuxième forme de l'invention, la composition de verre se caractérise en ce que le rapport pondéral NiO/CoO est compris entre 3,5 et 4,5 permettant ainsi d'avoir une valeur de b* qui varie de -5 à -1, correspondant à un verre bleuté.

Il a été trouvé que la sélection du rapport NiO/CoO dans la plage de valeurs indiquées permet que la valeur de b* se situe entre -5 et +3 avant la trempe, correspondant à une nuance neutre à bleue. Comme il sera indiqué plus loin, le contrôle du rapport NiO/CoO est particulièrement avantageux pour obtenir des verres ayant une coloration gris après une étape de trempe thermique.

La composition selon l'invention permet d'obtenir un verre possédant de préférence une transmission lumineuse globale $TL_{D65}$ comprise entre 35 et 50 % sous une épaisseur de 6 mm, ce qui le rend utile pour supprimer l'éblouissement par la lumière du soleil.

Selon une forme de l'invention, la composition est exempte de Se et de $MnO_2$.

Dans une forme particulièrement préférée de l'invention, la composition de verre gris comprend les colorants suivants dans une teneur variant dans les limites pondérales suivantes :

| | |
|---|---|
| $Fe_2O_3$ (fer total) | 0,07 à 0,12 % |
| CoO | 70 à 90 ppm |
| NiO | 300 à 500 ppm |

Grâce à la composition préférée ci-dessus, il est possible d'obtenir un verre dont la transmission lumineuse globale ($TL_{D65}$) est comprise entre 35 et 45 % sous une épaisseur de verre de 6 mm.

L'expression silico-sodo-calcique est ici utilisée dans le sens large et concerne toute composition de verre constituée d'une matrice verrière qui comprend les constituants suivants (en pourcentage en poids).

| | |
|---|---|
| $SiO_2$ | 64 - 75 % |
| $Al_2O_3$ | 0 - 5 % |
| $B_2O_3$ | 0 - 5 % |

(suite)

| | |
|---|---|
| CaO | 5 - 15 % |
| MgO | 0 - 10 % |
| Na$_2$O | 10 -18 % |
| K$_2$O | 0 - 5 % |
| BaO | 0 - 5 % |

On convient ici que la composition de verre silico-sodo-calcique peut comprendre, outre les impuretés inévitables contenues notamment dans les matières premières, une faible proportion (jusqu'à 1 %) d'autres constituants, par exemple des agents aidant à la fusion ou l'affinage du verre (SO$_3$, Cl, Sb$_2$O$_3$, As$_2$O$_3$) ou provenant d'un ajout éventuel de calcin recyclé dans le mélange vitrifiable.

Dans les verres selon l'invention, la silice est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 64 %, la résistance hydrolytique du verre décroît rapidement et la transmission dans le visible diminue également.

Les oxydes alcalins Na$_2$O et K$_2$O facilitent la fusion du verre et permettent d'ajuster sa viscosité aux températures élevées afin de le maintenir proche de celle d'un verre standard. K$_2$O peut être utilisé jusqu'à 5 % car au-delà se pose le problème du coût élevé de la composition. Par ailleurs, l'augmentation du pourcentage de K$_2$O ne peut se faire, pour l'essentiel, qu'au détriment de Na$_2$O ce qui contribue à augmenter la viscosité. La somme des teneurs en Na$_2$O et K$_2$O, exprimées en pourcentages pondéraux, est de préférence égale ou supérieure à 10 % et avantageusement inférieure à 20 %. Si la somme de ces teneurs est supérieure à 20 %-ou si la teneur en Na$_2$O est supérieure à 18 %, la résistance hydrolytique est fortement réduite.

Les oxydes alcalino-terreux permettent d'adapter la viscosité du verre aux conditions d'élaboration.

MgO peut être utilisé jusqu'à 10 % environ et sa suppression peut être compensée, au moins en partie, par une augmentation de la teneur en Na$_2$O et/ou SiO$_2$. De préférence, la teneur en MgO est inférieure à 5 % et de manière particulièrement avantageuse est inférieure à 2 % ce qui a pour effet d'augmenter la capacité d'absorption dans l'infrarouge sans nuire à la transmission dans le visible.

BaO permet d'augmenter la transmission lumineuse et il peut être ajouté dans la composition dans une teneur inférieure à 5 %.

BaO a une influence beaucoup plus faible que CaO et MgO sur la viscosité du verre et l'augmentation de sa teneur se fait essentiellement au détriment des oxydes alcalins, de MgO et surtout de CaO. Toute augmentation de BaO contribue à augmenter la viscosité du verre aux basses températures. De manière préférée, les verres selon l'invention sont exempts de BaO.

Outre le respect des limites définies précédemment pour la variation de la teneur de chaque oxyde alcalino-terreux, il est préférable pour obtenir les propriétés de transmission recherchées de limiter la somme des pourcentages pondéraux de MgO, CaO et BaO à une valeur égale ou inférieure à 15 %.

La composition selon l'invention peut en outre comprendre des additifs par exemple des agents modifiant les propriétés optiques dans certaines parties du spectre, notamment dans le domaine de l'ultraviolet, tels que CeO$_2$, TiO$_2$, WO$_3$, La$_2$O$_3$ et V$_2$O$_5$. La teneur totale en ces additifs n'excède généralement pas 2 % en poids de la composition, et de préférence n'excède pas 1 %.

La composition de verre conforme à l'invention est apte à être fondue dans les conditions de production du verre flotté ou du verre laminé. La fusion a généralement lieu dans des fours à flamme, éventuellement pourvus d'électrodes assurant le chauffage du verre dans la masse par passage du courant électrique entre les deux électrodes. Pour faciliter la fusion, et notamment rendre celle-ci mécaniquement intéressante, la composition de verre présente avantageusement une température correspondant à une viscosité $\eta$ telle que $\log \eta = 2$ qui est inférieure à 1500°C. De préférence encore, la température correspondant à la viscosité $\eta$ telle que $\log \eta = 3,5$ (notée T($\log \eta = 3,5$)) et la température au liquidus (notée T$_{liq}$) satisfont la relation :

$$T(\log \eta = 3,5) - T_{liq} > 20°C$$

et mieux encore :

$$T(\log \eta = 3,5) - T_{liq} > 50°C$$

L'épaisseur de la feuille de verre formée varie généralement entre 2 et 19 mm.

Dans le procédé « float », l'épaisseur du ruban obtenu par nappage du verre en fusion sur le bain d'étain varie de préférence entre 3 et 10 mm pour les vitrages destinés au bâtiment.

Par laminage, l'épaisseur du verre varie préférentiellement entre 4 et 10 mm.

La feuille de verre obtenue par la découpe du ruban de verre peut subir ultérieurement une opération de bombage et/ou de trempe.

La trempe thermique et une opération bien connue qui consiste à porter la feuille de verre à une température de l'ordre de 600 à 700°C pendant une durée n'excédant généralement pas quelques minutes et à la refroidir brutalement, par exemple par des jets d'air sous pression.

La feuille de verre trempée obtenue à partir de la composition selon l'invention est remarquable en ce qu'elle présente une coloration gris caractérisée notamment par une valeur de a* variant de - 2 à 0 et une valeur de b* variant de - 10 à + 2, de préférence de - 4 à 0.

Dans les conditions de la trempe thermique, la variation de la couleur du verre est réglée par la teneur relative en NiO. Il a été trouvé que dans le verre trempé, l'environnement chimique du nickel est modifié ce qui lui confère des propriétés d'absorption différentes. Il en résulte une augmentation de la valeur de a* et une diminution de celle de b*. Ces variations sont d'autant plus fortes que la teneur en NiO est élevée.

La feuille de verre obtenue peut également subir d'autres opérations de traitement ultérieures, par exemple visant à la revêtir d'une ou plusieurs couches d'oxydes métalliques en vue de réduire son échauffement par le rayonnement solaire.

La feuille de verre selon l'invention présente des valeurs de transmission du rayonnement solaire élevées dues à la faible teneur en fer. Néanmoins, on peut aisément réduire la transmission en revêtant la surface du verre exposé au rayonnement solaire d'une ou plusieurs couches d'au moins un oxyde métallique, par exemple de l'argent, ce qui a pour effet de réfléchir le rayonnement infrarouge sans modifier notablement la couleur du verre.

La feuille de verre, éventuellement trempée, peut être utilisée telle quelle ou être associée à une autre feuille de verre pour former un vitrage pour le bâtiment.

Les exemples de compositions de verre données ci-après permettent de mieux apprécier les avantages liés à la présente invention.

Dans ces exemples, on indique les valeurs des propriétés suivantes mesurées sous une épaisseur de verre de 6 mm :

- le facteur de transmission lumineuse globale sous illuminant D65 ($TL_{D65}$) mesuré entre 380 et 780 mm et calculé selon la norme EN 410, ainsi que les coordonnées chromatiques L*, a* et b*. Les calculs sont effectués en prenant l'observateur de référence colorimétrique C.I.E. 1931
- le rédox défini comme étant le rapport du FeO au fer total exprimé sous forme de $Fe_2O_3$. La teneur en fer total est mesurée par fluorescence X et la teneur en FeO est mesurée par chimie utilisant la voie humide.

Chacune des compositions figurant dans le tableau 1 est réalisée à partir de la matrice verrière suivante, dont les teneurs sont exprimées en pourcentages pondéraux, celle-ci étant corrigée au niveau de la silice pour s'adapter à la teneur totale en agents colorants ajoutés.

| | |
|---|---|
| $SiO_2$ | 71% |
| $Al_2O_3$ | 0,70% |
| CaO | 8,90 % |
| MgO | 3,80 % |
| $Na_2O$ | 14,10 % |
| $K_2O$ | 0,10 % |

Le verre obtenu est trempé thermiquement dans un four à 600-700°C pendant 1 à 3 minutes, puis il est refroidi par des buses à air sous une pression de 1 bar (0,1 MPa) pendant 1 minute.

Tous les verres conformes à l'invention (exemples 1 à 14) sont caractérisés par une transmission lumineuse globale ($TL_{D65}$) comprise entre 20 et 60 %, et une coloration gris comparables à celles que l'on obtient avec un verre contenant du sélénium (exemple comparatif 2) Néanmoins, la teneur en fer nettement plus faible que dans l'exemple comparatif 1 permet d'utiliser la composition dans des installations pour verre « clair » comme indiqué précédemment.

Par rapport au verre gris de l'exemple comparatif 1 sans sélénium contenant de l'oxyde de nickel, les verres de l'invention présentent une coloration grise plus neutre avant et après l'étape de trempe thermique. Ceci résulte de la plus fable teneur en fer.

Tableau 1

| Exemple | Comparatif 1 | Comparatif 2 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|---|
| Fe$_2$O$_3$ (%) | 0,3000 | 0,4600 | 0,1400 | 0,0800 | 0,0800 | 0,0400 | 0,0380 | 0,0640 | 0,0120 | 0,1240 | 0,0950 | 0,0280 | 0,0900 | 0,0850 | 0,0900 | 0,0900 |
| Rédox | 0,20 | 0,18 | 0,18 | 0,14 | 0,19 | 0,17 | 0,19 | 0,25 | 0,17 | 0,26 | 0,18 | 0,20 | 0,18 | 0,19 | 0,15 | 0,12 |
| CoO (ppm) | 64 | 69 | 120 | 80 | 70 | 46 | 65 | 135 | 90 | 75 | 65 | 110 | 75 | 85 | 74 | 80 |
| NiO (ppm) | 410 | - | 480 | 350 | 400 | 245 | 300 | 680 | 390 | 398 | 318 | 560 | 290 | 460 | 350 | 370 |
| Se (ppm) | - | 14 | - | - | - | - | - | - | - | - | - | - | - | - | - | - |
| NiO/CoO | 6,4 | 0,0 | 4,0 | 4,4 | 5,7 | 5,3 | 4,6 | 5,0 | 4,3 | 5,3 | 4,9 | 5,1 | 3,9 | 5,4 | 4,7 | 4,6 |
| *Avant la trempe* | | | | | | | | | | | | | | | | |
| TL$_{D65}$ (%) | 40,3 | 43,7 | 30,0 | 42,5 | 42,4 | 56,5 | 48,6 | 23,3 | 39,5 | 40,5 | 46,9 | 30,2 | 45,9 | 37,0 | 43,7 | 41,7 |
| L* | 69,7 | 72,1 | 61,6 | 71,2 | 71,2 | 79,9 | 75,2 | 55,4 | 69,1 | 69,8 | 74,1 | 61,8 | 73,5 | 67,3 | 72,0 | 70,6 |
| a* | -5,5 | -0,1 | -3,9 | -3,0 | -3,2 | -2,1 | -2,5 | -3,7 | -2,5 | -4,0 | -3,1 | -3,1 | -3,0 | -3,4 | -3,1 | -3,0 |
| b* | 3,6 | -2,1 | -4,6 | -2,0 | 1,8 | 0,6 | -1,2 | -0,7 | -2,7 | 0,4 | -0,3 | -0,2 | -3,6 | 1,0 | -0,8 | -1,1 |
| *Après la trempe* | | | | | | | | | | | | | | | | |
| TL$_{D65}$ (%) | 36,7 | - | 26,9 | 39,3 | 38,8 | 53,5 | 45,4 | 20,0 | 36,3 | 37,0 | 43,7 | 26,6 | 43,0 | 33,4 | 40,4 | 38,4 |
| L* | 67,1 | - | 58,9 | 69,0 | 68,6 | 78,1 | 73,2 | 51,9 | 66,7 | 67,3 | 72,0 | 58,6 | 71,6 | 64,5 | 69,7 | 68,3 |
| a* | -3,3 | - | -1,0 | -0,9 | -1,0 | -0,7 | -0,7 | -0,1 | -0,2 | -1,7 | -1,2 | -0,1 | -1,2 | -0,9 | -1,0 | -0,9 |
| b* | -0,3 | - | -8,8 | -5,5 | -2,1 | -2,0 | -4,3 | -6,3 | -6,5 | -3,4 | -3,5 | -5,2 | -6,5 | -3,3 | -4,2 | -4,7 |

**Revendications**

1. Composition de verre gris silico-sodo-calcique, **caractérisée en ce qu'**elle est constituée d'une matrice verrière comprenant les constituants suivants (en pourcentage en poids) :

| | |
|---|---|
| $SiO_2$ | 64 - 75 % |
| $Al_2O_3$ | 0 - 5 % |
| $B_2O_3$ | 0 - 5 % |
| CaO | 5 - 15 % |
| MgO | 0-10% |
| $Na_2O$ | 10 - 18 % |
| $K_2O$ | 0 - 5 % |
| BaO | 0-5% |

et qu'elle comprend les agents colorants ci-après dans une teneur variant dans les limites pondérales suivantes :

| | |
|---|---|
| $Fe_2O_3$ (fer total) | 0,01 à 0,14 % |
| CoO | 40 à 150 ppm |
| NiO | 200 à 700 ppm |

le rapport pondéral NiO/CoO étant compris entre 3,5 et 6, et le verre présentant une transmission lumineuse globale sous illuminant D65 ($TL_{D65}$) comprise entre 20 et 60 % mesurée pour une épaisseur de 6 mm.

2. Composition selon la revendication 1, **caractérisée en ce que** la transmission lumineuse $TL_{D65}$ est comprise entre 35 et 50 %, de préférence entre 35 et 45 %.

3. Composition selon l'une des revendications 1 ou 2, **caractérisée en ce que** le verre présente les coordonnées chromatiques suivantes mesurées sous illuminant $D_{65}$ :

L* varie de 50 à 85, de préférence 65 à 75
a* varie de - 4 à 0
b* varie de - 5 à +3

4. Composition selon l'une des revendications 1 à 3, **caractérisée en ce que** le rapport pondéral NiO/CoO est compris entre 3,5 et 4,5 et **en ce que** b* est compris entre -5 et -1.

5. Composition selon l'une des revendications 1 à 3, **caractérisée en ce que** le rapport pondéral NiO/CoO est compris entre 5 et 6 et que b* est compris entre -1 et +2.

6. Composition selon l'une des revendications 1 à 5, **caractérisée en ce qu'**elle comprend les agents colorants ci-après dans une teneur variant dans les limites pondérales suivantes :

| | |
|---|---|
| $Fe_2O_3$ (fer total) | 0,07 à 0,12 % |
| CoO | 70 à 90 ppm |
| NiO | 300 à 500 ppm |

7. Composition selon l'une des revendications 1 à 6, **caractérisée en ce que** le rédox varie de 0,1 à 0,3, de préférence entre 0,15 et 0,28.

8. Composition selon l'une des revendications 1 à 7, **caractérisée en ce qu'**elle est exempte de Se et de $MnO_2$.

9. Feuille de verre formée par flottage sur un bain de métal fondu ou par laminage, de composition chimique telle que définie par l'une quelconque des revendications 1 à 8.

10. Feuille de verre trempée thermiquement de composition selon l'une quelconque des revendications 1 à 8 et présentant les coordonnées chromatiques suivantes mesurées sous illuminant $D_{65}$ pour une épaisseur de 6 mm :

a* varie de - 2 à 0
b* varie de - 10 à + 2, de préférence -4 à 0.

11. Feuille de verre selon l'une des revendications 9 ou 10, **caractérisée en ce qu'**elle présente une épaisseur comprise entre 2 et 19 mm.

12. Feuille de verre selon l'une des revendications 9 à 11, **caractérisée en ce qu'**elle comprend en outre au moins une couche d'au moins un oxyde métallique permettant de réfléchir le rayonnement infrarouge.

13. Vitrage, notamment pour le bâtiment, **caractérisé en ce qu'**il comprend au moins une feuille de verre selon l'une des revendications 9 à 12.

**Claims**

1. A gray soda-lime silicate glass composition, **characterized in that** it consists of a glass matrix that comprises the following constituents (in percentages by weight):

| | |
|---|---|
| $SiO_2$ | 64-75% |
| $Al_2O_3$ | 0-5% |
| $B_2O_3$ | 0-5% |
| CaO | 5-15% |
| MgO | 0-10% |
| $Na_2O$ | 10-18% |
| $K_2O$ | 0-5% |
| BaO | 0-5%. |

and it comprises the following coloring agents with contents varying within the following weight limits:

| | |
|---|---|
| $Fe_2O_3$ (total iron) | 0.01 to 0.14% |
| CoO | 40 to 150 ppm |
| NiO | 200 to 700 ppm |

the NiO/CoO weight ratio being between 3.5 and 6 and the glass having an overall light transmission ($TL_{D65}$) under illuminant $D_{65}$ of between 20 and 60% measured for a thickness of 6 mm.

2. The composition as claimed in claim 1, **characterized in that** the light transmission $TL_{D65}$ is between 35 and 50%, preferably between 35 and 45%.

3. The composition as claimed in either of claims 1 and 2, **characterized in that** the glass has the following chromatic coordinates measured under illuminant $D_{65}$:

L* varies from 50 to 85, preferably 65 to 75;
a* varies from - 4 to 0; and
b* varies from - 5 to + 3.

4. The composition as claimed in one of claims 1 to 3, **characterized in that** the NiO/CoO weight ratio is between 3.5 and 4.5 and **in that** b* is between -5 and -1.

5. The composition as claimed in one of claims 1 to 3, **characterized in that** the NiO/CoO weight ratio is between 5 and 6 and **in that** b* is between -1 and +2.

6. The composition as claimed in one of claims 1 to 5, **characterized in that** it comprises the following colorants in contents that vary within the following weight limits:

| | |
|---|---|
| Fe$_2$O$_3$ (total iron) | 0.07 to 0.12%; |
| CoO | 70 to 90 ppm; |
| NiO | 300 to 500 ppm. |

7. The composition as claimed in one of claims 1 to 6, **characterized in that** the redox varies from 0.1 to 0.3, preferably between 0.15 and 0.28.

8. The composition as claimed in one of claims 1 to 7, **characterized in that** it contains no Se and no MnO$_2$.

9. A glass sheet formed by the float process on a bath of molten metal, or by rolling, with a chemical composition as defined by any one of claims 1 to 8.

10. A thermally toughened glass sheet having a composition as claimed in any one of claims 1 to 8 and having the following chromatic coordinates measured under illuminate D$_{65}$ for a thickness of 6 mm:

   a* varies from - 2 to 0;
   b* varies from - 10 to + 2, preferably -4 to 0.

11. The glass sheet as claimed in either of claims 9 and 10, **characterized in that** it has a thickness of between 2 and 19 mm.

12. The glass sheet as claimed in one of claims 9 to 11, **characterized in that** it furthermore includes at least one film of at least one metal oxide for reflecting infrared radiation.

13. Glazing, especially for buildings, **characterized in that** it comprises at least one glass sheet as claimed in one of claims 9 to 12.

**Patentansprüche**

1. Kalk-Natron-Silicat-Grauglaszusammensetzung, **durch gekennzeichnet, dass** sie von einer Glasmatrix gebildet wird, die (in Gewichtsprozent) folgende Bestandteile:

| | | |
|---|---|---|
| SiO$_2$ | 64 | bis 75 % |
| Al$_2$O$_3$ | 0 | bis 5 % |
| B$_2$O$_3$ | 0 | bis 5 % |
| CaO | 5 | bis 15 % |
| MgO | 0 | bis 10 % |
| Na$_2$O | 10 | bis 18 % |
| K$_2$O | 0 | bis 5 % |
| BaO | 0 | bis 5 % |

umfasst, **und dass** sie folgende Farbmittel mit einem Gehalt, der innerhalb der nachstehenden Gewichtsgrenzen variiert, umfasst:

| | | |
|---|---|---|
| Fe$_2$O$_3$ (Gesamteisen) | 0,01 bis | 0,14 % |
| CoO | 40 bis | 150 ppm |
| NiO | 200 bis | 700 ppm, |

wobei das Gewichtsverhältnis von NiO/CoO 3,5 bis 6 beträgt und das Glas einen globalen Lichttransmissionsgrad für Normlichtart D65 (TL$_{D65}$) von 20 bis 60 %, gemessen bei einer Dicke von 6 mm, aufweist.

**2.** Zusammensetzung nach Anspruch 1, **dadurch gekennzeichnet, dass** der Lichttransmissionsgrad $TL_{D65}$ 35 bis 50 % und vorzugsweise zwischen 35 und 45 % beträgt.

**3.** Zusammensetzung nach Anspruch 1 oder 2, **dadurch gekennzeichnet, dass** das Glas in der Normfarbtafel folgende für Normlichtart D65 gemessene Koordinaten aufweist:

L* 50 bis 85 und vorzugsweise 65 bis 75
a* -4 bis 0
b* -5 bis +3.

**4.** Zusammensetzung nach einem der Ansprüche 1 bis 3, **dadurch gekennzeichnet, dass** das Gewichtsverhältnis von NiO/CoO 3,5 bis 4,5 **und dass** b* -5 bis -1 beträgt.

**5.** Zusammensetzung nach einem der Ansprüche 1 bis 3, **dadurch gekennzeichnet, dass** das Gewichtsverhältnis von NiO/CoO 5 bis 6 **und dass** b* -1 bis +2 beträgt.

**6.** Zusammensetzung nach einem der Ansprüche 1 bis 5, **dadurch gekennzeichnet, dass** sie folgende Farbmittel mit einem Gehalt, der innerhalb der nachstehenden Gewichtsgrenzen variiert, umfasst:

| | | |
|---|---|---|
| $Fe_2O_3$ (Gesamteisen) | 0,07 bis | 0,12 % |
| CoO | 70 bis | 90 ppm |
| NiO | 300 bis | 500 ppm. |

**7.** Zusammensetzung nach einem der Ansprüche 1 bis 6, **dadurch gekennzeichnet, dass** der Redoxgrad 0,1 bis 0,3 und vorzugsweise zwischen 0,15 und 0,28 beträgt.

**8.** Zusammensetzung nach einem der Ansprüche 1 bis 7, **dadurch gekennzeichnet, dass** sie frei von Se und $MnO_2$ ist.

**9.** Glasscheibe mit einer von einem der Ansprüche 1 bis 8 definierten chemischen Zusammensetzung und welche durch Aufschwimmen auf einem aus einer Metallschmelze bestehenden Bad oder durch Walzen gebildet worden ist.

**10.** Glasscheibe mit einer Zusammensetzung nach einem der Ansprüche 1 bis 8, die thermisch vorgespannt ist und bei einer Dicke von 6 mm in der Normfarbtafel folgende für die Normlichtart D65 gemessene Koordinaten aufweist:

a* -2 bis 0
b* -10 bis +2 und vorzugsweise -4 bis 0.

**11.** Glasscheibe nach Anspruch 9 oder 10, **dadurch gekennzeichnet, dass** ihre Dicke 2 bis 19 mm beträgt.

**12.** Glasscheibe nach einem der Ansprüche 9 bis 11, **dadurch gekennzeichnet, dass** sie außerdem mindestens eine Schicht aus mindestens einem Metalloxid, welche die Reflexion der Infrarotstrahlung erlaubt, umfasst.

**13.** Verglasung, insbesondere für das Bauwesen, **dadurch gekennzeichnet, dass** sie mindestens eine Glasscheibe nach einem der Ansprüche 9 bis 12 umfasst.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5264400 A
- US 5656500 A
- JP 52049010 B
- EP 677492 A
- FR 2672587 A
- JP 56041579 B
- US 5888917 A